(19) **Europäisches Patentamt / European Patent Office / Office européen des brevets**

(11) **EP 3 142 988 B1**

(12) **FASCICULE DE BREVET EUROPEEN**

(45) Date de publication et mention de la délivrance du brevet:
**13.12.2023 Bulletin 2023/50**

(21) Numéro de dépôt: **15726225.4**

(22) Date de dépôt: **05.05.2015**

(51) Classification Internationale des Brevets (IPC):
**C04B 35/528** *(2006.01)* **C04B 35/636** *(2006.01)*

(52) Classification Coopérative des Brevets (CPC):
**C04B 35/6264; C04B 35/522; C04B 35/528; C04B 35/636;** C04B 2235/602; C04B 2235/6021; C04B 2235/606

(86) Numéro de dépôt international:
**PCT/FR2015/000093**

(87) Numéro de publication internationale:
**WO 2015/173479 (19.11.2015 Gazette 2015/46)**

(54) **PROCÉDÉ DE PRÉPARATION D'UN MATÉRIAU COMPOSITE CARBONÉ**

VERFAHREN ZUR HERSTELLUNG EINES KOHLENSTOFFVERBUNDMATERIALS

METHOD FOR PREPARING A COMPOSITE CARBON MATERIAL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.05.2014 FR 1401115**

(43) Date de publication de la demande:
**22.03.2017 Bulletin 2017/12**

(73) Titulaire: **Tokai Cobex Savoie**
**73260 La Léchère (FR)**

(72) Inventeurs:
• **ALLARD, Bénédicte**
**69780 Mions (FR)**
• **FIGURA, Florent**
**69390 Vourles (FR)**
• **ROZ, Jean-Michel**
**69007 Lyon (FR)**

(74) Mandataire: **Germain Maureau**
**12, rue Boileau**
**69006 Lyon (FR)**

(56) Documents cités:
FR-A1- 2 204 673   NO-L- 853 163
US-A- 3 567 808   US-A- 3 615 829
US-A- 3 793 223   US-A- 4 058 403

**Description**

La présente invention concerne un procédé de préparation d'un matériau composite carboné destiné à être utilisé pour la fabrication de blocs de carbone, par exemple une anode de type précuite ou de type Söderberg ou une cathode dans l'industrie de l'aluminium, ou une électrode dans le domaine de l'aciérie et de l'électrométallurgie ou encore des blocs carbonés réfractaires.

Un procédé de fabrication de blocs de carbone classiquement mis en oeuvre dans l'industrie de l'aluminium comprend les étapes suivantes :

a) On prépare un mélange comprenant des matières premières carbonées (par exemple choisies parmi le coke, l'anthracite et le graphite), du brai utilisé comme liant de ce mélange, et éventuellement des additifs utilisés par exemple pour faciliter la mise en forme et les traitements thermiques.

b) On porte le mélange à une température d'environ 160°C, de sorte à rendre le brai liquide et mouillant pour les matières premières carbonées, et on le malaxe pendant environ une heure.

c) A l'issue du malaxage, on refroidit le mélange en abaissant la température à environ 110°C de manière à obtenir une pâte de matériau composite carboné avec une cohésion appropriée pour être mise en forme, c'est-à-dire densifiée et modelée selon une forme particulière voulue, par exemple par extrusion, pressage, vibro-compactage, moulage. On obtient ainsi un produit « cru ».

d) Le produit « cru » mis en forme est alors refroidi rapidement afin de pouvoir être manipulé sans risque d'être dégradé.

e) On cuit le produit ainsi obtenu et on le soumet éventuellement à une graphitation.

Le brai est un résidu de distillation du pétrole à haut poids moléculaire ou un résidu de distillation des goudrons de houille.

La cuisson consiste à rendre conducteur le produit par cokéfaction du brai. La température de cuisson est d'environ 1000°C. La graphitation consiste à transformer le coke en graphite vers 3000°C.

Ce procédé de fabrication peut éventuellement comprendre une étape d'imprégnation entre la cuisson et la graphitation et/ou après la graphitation.

Généralement, la cuisson est réalisée dans un four distant des équipements de mélange, malaxage et mise en forme, et après un délai variable selon les besoins opérationnels.

C'est pourquoi, il est essentiel qu'à l'issue de l'étape de mise en forme (par exemple une étape d'extrusion), la forme du produit carboné se tienne parfaitement, et ce en particulier pendant le stockage et le transport dudit produit.

Pour obtenir cette tenue du produit à l'issue de l'étape de mise en forme, et sachant que le coke, le graphite et l'anthracite ne sont pas des éléments carbonés facilement mouillables, on utilise le brai comme liant du mélange des matières premières carbonées. Afin de disposer d'une viscosité adéquate du brai pour qu'il mouille les matières premières carbonées et ainsi obtenir un mélange homogène au cours de l'étape de malaxage, il est nécessaire de porter le mélange à une température d'au moins 160°C. Or, à une température aussi élevée, le brai dégage des gaz et des particules très toxiques que sont les hydrocarbures aromatiques polycycliques. De plus, le brai est connu comme étant un composé cancérigène.

Ainsi, ce procédé de fabrication de blocs de carbone mettant en oeuvre du brai comme liant lors de la préparation du matériau composite carboné n'est pas pleinement satisfaisant d'un point de vue de la toxicité des matières volatiles dégagées.

En outre, les étapes de ce procédé de fabrication nécessitent d'être réalisées à des températures élevées, à savoir comprises entre environ 100°C et 160°C, notamment pour ajuster la mouillabilité du brai et la rhéologie du mélange des matières premières carbonées à chacune des étapes de fabrication (malaxage, mise en forme). Autrement dit, ce procédé de fabrication est très consommateur d'énergie, et tout particulièrement d'énergie thermique.

A cet égard, le brevet américain US 4 072 599 décrit un exemple de procédé de fabrication d'électrode de carbone utilisant du brai comme liant des matières premières carbonées. Comme expliqué ci-dessus, ce procédé n'est pas satisfaisant du point de vue de la toxicité des matières volatiles dégagées. US 3 615 829 divulgue un procédé de fabrication d'électrodes.

Par ailleurs, on connaît le brevet US 4 704 230 qui décrit une alternative à ce procédé de fabrication d'électrode de carbone. En effet, dans ce brevet américain US 4 704 230, le liant des matières premières carbonées précitées consiste en de l'urée et des lignosulfonates à parts égales qui sont ajoutés au mélange sous forme solide. L'étape de mélange des matières premières carbonées est effectuée à une température d'au moins 132°C, afin de liquéfier et maintenir l'urée sous forme liquide pour bien homogénéiser le mélange. Ensuite, le mélange est mis en forme selon une technique classique telle que l'extrusion, afin d'obtenir un matériau composite en carbone adéquat pour la fabrication d'une électrode de carbone.

Ainsi, au cours du procédé décrit dans le brevet US 4 704 230, du fait que le brai a été substitué par un autre liant constitué de lignosulfonates et d'urée, les problèmes d'émissions toxiques liés au brai sont minimisés.

Cependant, on relève que ce procédé de préparation d'un matériau composite carboné nécessite aussi d'être mis en oeuvre à des températures élevées d'au moins 132°C du fait de la température de fusion de l'urée, ce qui est également très consommateur d'énergie et entraîne l'émission de composés organiques volatiles présents dans les lignosulfonates.

En outre, l'urée que contient le matériau composite carboné obtenu à l'issue de ce procédé de préparation présente les inconvénients suivants :

- Il diminue le rendement carbone de ce matériau composite carboné. En effet, l'urée est un composé organique de formule chimique $CO(NH_2)$.

- Il augmente la porosité du matériau composite carboné, du fait de son dégazage au cours de l'étape de cuisson du procédé de fabrication de l'électrode de carbone.

Par ailleurs, les montées en températures mises en oeuvre au cours de ce procédé de fabrication peuvent dégrader les lignosulfonates et ainsi amoindrir leurs propriétés liantes. On a en effet constaté que la lignine tendait à se dégrader à partir de 80°C. Autrement dit, l'utilisation de lignine sous la forme de lignosulfonates comme liant dans ce procédé de fabrication de matériau composite carboné à des températures aussi élevées (environ 132°C) n'est pas optimale, voire même la lignine se dégrade très certainement au cours dudit procédé.

Ainsi, pour toutes ces raisons, le procédé décrit dans le brevet US 4 704 230 qui constitue une alternative au procédé traditionnel de préparation de matériau composite carboné destiné à la fabrication de blocs de carbone tels que des électrodes de carbone n'est pas non plus pleinement satisfaisant.

La présente invention se propose de remédier aux inconvénients détaillés ci-dessus inhérents aux procédés de fabrication de blocs de carbone et plus généralement aux procédés de préparation de matériau composite carboné destiné à la fabrication de blocs de carbone.

Les inventeurs de la présente ont en effet mis au point de manière tout à fait surprenante un nouveau procédé de préparation d'un matériau composite carboné n'utilisant pas de composé toxique classé comme cancérigène tel que le brai et qui, en outre, requiert beaucoup moins d'énergie que les procédés de préparation connus à ce jour, et ce tout en fournissant un matériau composite carboné exhibant des propriétés physico-chimiques parfaitement appropriées en vue de son utilisation pour la fabrication de blocs de carbone. Le procédé de préparation selon l'invention présente aussi les avantages suivants :

- Il nécessite moins de liant que le procédé traditionnel utilisant du brai. Cela a pour intérêts d'augmenter le rendement carbone du procédé de préparation et de réduire les coûts des matières premières.
- Il peut parfaitement être mis en oeuvre dans les installations existantes de procédé de préparation de matériau composite carboné pour blocs de carbone.

La présente invention a ainsi pour premier objet un procédé de préparation d'un matériau composite carboné qui se caractérise en ce qu'il comprend au moins les étapes selon la revendication 1.

A l'étape a) du procédé de préparation, le mélange comprend des matières carbonées choisies parmi :

- le coke (de pétrole, de brai, métallurgique, de fonderie,..),
- l'anthracite,
- le recyclé de blocs carbonés, à savoir des morceaux de blocs carbonés concassés,
- le graphite artificiel (obtenu par traitement thermique de l'ordre de 3000°C d'un carbone graphitisable),

La granulométrie des matières premières carbonées est de préférence inférieure à 50 mm, plus préférentiellement inférieure à 30 mm. Le choix des matières premières carbonées et de leur granulométrie est à la portée de l'homme du métier et sera orienté en fonction des propriétés physico-chimiques et mécaniques qu'il souhaite donner au matériau composite carboné.

On désigne par « liant », l'ensemble comprenant la lignine, le solvant et les éventuels agents liants. La masse de lignine est comprise comme étant la masse de la matière sèche de lignine.

La modification du rapport R au cours de l'étape b) du procédé permet notamment d'obtenir à l'étape a) une bonne mouillabilité des matières premières carbonées par le liant et à l'étape b) la gélification du mélange du fait de la gélification du liant.

Par gélification du mélange, on entend que la viscosité du mélange évolue (augmente avec la valeur R) jusqu'à l'obtention d'une pâte de matériau composite carboné ayant une cohésion suffisante pour sa mise en forme, du fait de l'évolution de la viscosité du liant lorsque l'on fait varier le rapport R.

Par mise en forme, on entend que la pâte de matériau composite carboné est densifiée et modelée selon une forme particulière voulue, par exemple par extrusion, pressage, vibro-compactage ou moulage.

Préférentiellement, la valeur du rapport R est multipliée par un coefficient S au moins égal à 1.2, et de préférence au moins égal à 1.5, au cours de l'étape b) de gélification.

Des essais ont montrés qu'une telle variation du rapport R induit un changement rhéologique du mélange qui peut permettre d'obtenir consécutivement une optimisation de la mouillabilité des matières premières carbonée par la lignine à l'étape a) et des propriétés de cohésion de la pâte de matériau composite carboné appropriées pour sa mise en forme à l'issue de l'étape b).

Ce coefficient S reste toutefois préférentiellement inférieur à 5, et préférentiellement inférieur à 3, pour éviter que la pâte de matériau composite carbonée ne s'assèche trop et/ou limiter l'énergie nécessaire au retrait d'une quantité trop importante de solvant dans le liant.

Dans un mode de réalisation de l'invention, le solvant du mélange de l'étape a) est une solution aqueuse.

Dans un mode de réalisation de l'invention, à l'étape a) du procédé de préparation, le mélange a un pH basique, à savoir un pH supérieur à 7, et plus préférentiellement compris entre 8 et 12. Cela évite tout risque de corrosion et facilite la dissolution de la lignine, en particulier si elle a été ajoutée au mélange sous forme de poudre.

De plus, un pH basique permet d'augmenter et d'accélérer la mouillabilité des matières premières carbonées du mélange, et ce même à température ambiante.

Ainsi, pour toutes ces raisons, un pH basique peut être avantageux à l'étape a) du procédé de préparation selon l'invention.

Pour ce faire, le mélange comprend avantageusement au moins une base choisie parmi la soude, l'ammoniaque ou des bases plus faibles telles que l'hydroxyde de potassium (KOH, à savoir la potasse caustique), l'hydroxyde de magnésium $(Mg(OH)_2)$, et l'oxyde de calcium (CaO, à savoir la chaux vive).

Ainsi, le solvant de l'étape a) est avantageusement choisi parmi les solutions aqueuses de soude, d'ammoniaque, ou de bases plus faibles telles l'hydroxyde de potassium, l'hydroxyde de magnésium et l'oxyde de calcium.

Si l'on utilise une solution aqueuse de soude comme solvant, le produit composite carboné obtenu à l'issue du procédé de préparation selon l'invention peut comprendre une teneur en sodium préjudiciable pour certaines applications dudit produit composite carboné (par exemple pour la fabrication d'anode pour l'électrolyse de l'aluminium). C'est pourquoi, pour ces applications du matériau composite carboné, on privilégiera d'autres solvants tels que les solutions aqueuses d'ammoniaque. En effet, l'ammoniaque présente l'avantage de s'évaporer facilement vers 60°C et ainsi ne se retrouvera pas dans le produit final qu'est le matériau composite carboné.

De manière préférée, la concentration massique de la base dans la solution aqueuse est inférieure à 30%, encore plus préférentiellement comprise entre 1 et 10%.

Dans un autre mode de réalisation de l'invention, le solvant est un solvant organique, de préférence un solvant organique dans lequel la lignine Kraft est soluble. La lignine Kraft est ci-après plus amplement décrite.

De manière préférée, le solvant organique est choisi parmi le diméthylformamide, le diméthylsulfoxyde, le dioxane, le 2 méthoxy-éthanol, l'acétone et l'éthanol. Ces solvants organiques présentent l'avantage de solubiliser la lignine Kraft.

L'utilisation d'un solvant organique, de préférence tels que ceux détaillés ci-dessus peut être privilégiée lorsque le matériau composite carboné obtenu selon le procédé de préparation selon l'invention est destiné à la fabrication de blocs de carbone (par exemple une anode pour l'électrolyse de l'aluminium) dont l'application industrielle requiert une teneur minimale, voire nulle, en sodium dans ces blocs de carbone.

Le solvant peut encore être un mélange binaire de solvant aqueux et organique.

La lignine est un polymère amorphe tridimensionnel composé de structures de phénylpropane méthoxylées. Il s'agit d'un polymère thermoplastique. La lignine peut être issue de la polymérisation des alcools p-coumarylique, coniférylique et sinapylique.

De manière préférée, la lignine du mélange de l'étape a) provient d'un procédé papetier, par exemple un procédé de fabrication de pâte à papier, au cours duquel elle est produite en tant que résidu et qu'on cherche à éliminer au maximum parmi les composants indésirables du bois pour ne conserver que les fibres cellulosiques.

En effet, au cours des procédés de fabrication de pâte à papier, on récupère comme résidu des liqueurs noires qui contiennent de la lignine. Il peut s'agir de :

- La lignine kraft qui est la lignine retrouvée dans la liqueur noire produite au cours du procédé sulfate (aussi connu sous la dénomination de « procédé Kraft »). Près de 90% des pâtes chimiques produites dans le monde sont issues de ce procédé sulfate, à base de soude et de sulfate de sodium. La lignine Kraft est un mélange de thiolignine et de phénolates. C'est un produit hydrophobe, mais soluble en milieu alcalin. En effet, il a été observé que la lignine issue du procédé Kraft se dissout bien dans les solutions aqueuses basiques.

- Les lignosulfonates qui sont retrouvées dans la liqueur noire du procédé acide au sulfite (aussi dénommé « procédé au bisulfite »). Ce sont des produits solubles dans l'eau mais dont la teneur en soufre peut atteindre 6%. Il s'agit de cette famille de lignine qui est mise en oeuvre au cours du procédé du brevet US 4 704 230 précité.

Ainsi, dans ce mode de réalisation de l'invention, le procédé de préparation présente aussi l'intérêt de recycler la lignine produite comme résidu au cours d'un procédé papetier (par exemple la fabrication de pâte à papier). La lignine constitue le deuxième polymère naturel (après la cellulose) et a l'avantage d'être disponible en grande quantité.

A l'étape a) du procédé de préparation, la lignine du mélange est préférentiellement la lignine Kraft. En effet, la lignine Kraft présente les avantages suivants par rapport aux lignosulfonates :

- Elle comprend moins de soufre. La présence de soufre peut en effet être préjudiciable d'un point de vue environnemental lors du procédé d'électrolyse de l'aluminium, ou lors de la cuisson ou lors de la graphitation de matériaux carbonés.

- Elle se dissout bien en milieu basique comme cela a été expliqué ci-dessus. La solution aqueuse basique du mélange de l'étape a) permet alors de neutraliser les éventuelles interactions entre des fonctions, notamment acides, des molécules de lignine et de favoriser la dissolution de la lignine..

Dans un mode de réalisation de l'invention, la lignine a été incorporée dans le mélange de l'étape a) sous la forme d'une liqueur noire issue du procédé Kraft. Le solvant du mélange de l'étape a) comprend alors au moins la liqueur noire dans lequel la lignine Kraft est dissoute.

Mais la liqueur noire peut être de qualité variable ; ce qui est susceptible d'entraîner des risques de variabilité des propriétés physico-chimiques et mécaniques des produits carbonés obtenus.

C'est pourquoi, dans un autre mode de réalisation de l'invention, la lignine incorporée dans le mélange de l'étape a) se présente sous la forme d'une poudre de lignine. De préférence, la poudre de lignine a été obtenue à partir d'un procédé d'extraction et de purification d'une liqueur noire produite au cours du procédé Kraft. Cette poudre de lignine présente l'avantage d'être exempte d'impuretés.

Le procédé d'extraction et de purification de la lignine contenue dans la liqueur noire peut consister en un traitement acide, alcalin ou thermique de manière à obtenir un composé de lignine sous forme de poudre. La précipitation des lignines à partir des liqueurs noires du procédé Kraft se fait par acidification par le dioxyde de carbone et l'acide sulfurique. A cet égard, la demande de brevet US 2010/0325947 A1 décrit un exemple de procédé d'extraction de lignine sous forme de poudre à partir de liqueur noire provenant de procédé de fabrication de pâte à papier qui permet d'obtenir une lignine exempte d'impuretés. Ce procédé est connu sous la dénomination commerciale « lignoboost® ». Le procédé d'extraction et de purification d'une lignine issue de liqueurs noires produite au cours du procédé Kraft de l'industrie papetière est parfaitement à la portée de l'homme du métier.

Dans le mode de réalisation de l'invention dans lequel la lignine se présente sous la forme d'une poudre, cette poudre de lignine peut avoir été dissoute, préalablement à l'étape a) du procédé de préparation, dans au moins une partie du solvant qui est de préférence une solution basique, par exemple une solution aqueuse de pH supérieur à 7, et plus préférentiellement de pH compris entre 8 et 12. Cette plage de pH préférentielle présente les avantages de combiner une bonne dissolution de la lignine et une mise en oeuvre industrielle de la préparation du mélange aisée. En effet, les solutions très basiques posent de multiples difficultés de manipulations au niveau industriel. Ensuite, la solution aqueuse basique comportant la lignine ainsi obtenue est incorporée dans le mélange de l'étape a) comprenant les matières premières carbonées.

La dissolution de la poudre de lignine dans le solvant peut être réalisée à température ambiante ou facilitée par une montée en température de la lignine et du solvant jusqu'à environ 80°C.

Dans un autre mode de réalisation de l'invention, on prépare le mélange de l'étape a) en incorporant dans un mélangeur, outre les matières premières carbonées précitées, la lignine sous forme de poudre, et le solvant qui est de préférence une solution basique (par exemple une solution de soude, d'ammoniaque, d'hydroxyde de potassium, d'hydroxyde de magnésium $Mg(OH)_2$ ou d'oxyde de calcium) telle que détaillée ci-dessus. Dans un autre mode de réalisation de l'invention, préalablement à l'étape a), on prépare un pré-mélange en mélangeant d'abord ensemble toutes les matières sèches que comprend le mélange de l'étape a), à savoir au moins les matières premières carbonées et la lignine sous forme de poudre. Ensuite, on ajoute à ce pré-mélange le solvant.

Selon l'invention, le mélange de l'étape a) comprend en pourcentages massiques par rapport à la masse totale des matières sèches dudit mélange :

- de 80 % à 97%, de préférence 90 % à 97%, de matières premières carbonées ;
- de 3 % à 20%, de préférence de 3% à 10%, de lignine.

Les proportions des matières premières carbonées et de lignine pourront être ajustées en fonction des propriétés physico-chimiques souhaitées du matériau composite carboné obtenu à l'issue du procédé de préparation selon l'invention. Cet ajustement des composants du mélange de l'étape a) est parfaitement à la portée de l'homme du métier. Avantageusement, le mélange de l'étape a) comprend au moins un agent liant. Cet agent liant contribue à améliorer les propriétés liantes de la lignine dans ledit mélange.

L'agent liant est choisi parmi les polysaccharides et les carbohydrates. Ils ont notamment pour effet d'augmenter le rendement carbone du matériau composite carboné obtenu selon le procédé de préparation selon l'invention. Ils sont connus pour avoir une interaction forte avec les lignines.

Dans le mélange de l'étape a), la masse des agents liants représente jusqu'à 20% de la masse de lignine.

La valeur du rapport R dans le mélange de l'étape a) est inférieure à 0,25, de préférence comprise entre 0,07 et 0,25, encore plus préférentiellement comprise entre 0,15 et 0,20.

Un rapport R tel que défini ci-dessus dans le mélange de l'étape a) est particulièrement approprié pour assurer :

- une bonne dissolution de la lignine,

- une bonne mouillabilité des matières premières carbonées, et

- un mélange aisé à l'étape a) du procédé de préparation selon l'invention.

Cela permet ainsi d'obtenir un mélange homogène à l'issue de l'étape a). Par ailleurs, il est intéressant de minimiser autant que possible la quantité de solvant dans le mélange de l'étape a), étant donné qu'il peut être nécessaire ultérieurement, au cours du procédé de préparation, de le retirer au moins en partie.

Le mélange de l'étape a) peut en outre comprendre des additifs connus de l'homme de métier qui sont destinés à faciliter la mise en forme et les traitements thermiques du matériau composite carboné qui est obtenu à l'issue du procédé de préparation.

Le mélange de l'étape a) est avantageusement réalisé à une température comprise entre 5°C et 50°C, préférentiellement entre 10°C et 40°C, encore plus préférentiellement entre 15 et 25°C. Ainsi, l'étape a) du procédé de préparation peut être mise en oeuvre à température ambiante. Cela est particulièrement avantageux d'un point de vue des consommations énergétiques du procédé de préparation selon l'invention.

Comme cela a été expliqué ci-dessus, il est possible de monter en température le mélange à environ 80°C, au début de l'étape a) du procédé de préparation, afin de faciliter la dissolution de la lignine dans le solvant si elle a, par exemple, été ajoutée sous forme de poudre au mélange.

Afin d'obtenir un mélange homogène à l'étape a) du procédé de préparation, on peut utiliser, par exemple un malaxeur, une bétonnière, ou tout type de mélangeur qui est approprié pour le mélange des matières premières carbonées décrites ci-dessus.

A l'étape a), il est important que le mélange soit réalisé de manière à ce que les matières premières carbonées soient parfaitement mouillées par le solvant et la lignine, de sorte que la lignine puisse agir comme un liant desdites matières premières carbonées.

A l'étape b) du procédé, on gélifie le mélange obtenu à l'issue de l'étape a) jusqu'à l'obtention d'une pâte de matériau composite carboné.

L'obtention de la pâte de matériau composite carboné à l'étape b) est importante pour obtenir des qualités physico-chimiques dudit matériau (autrement dit le « produit cru ») performantes et comparables à celles d'un matériau composite carboné obtenu selon les procédés de préparation de l'état de l'art qui ont été rappelés ci-dessus.

Comme cela a été expliqué ci-dessus, au cours de l'étape b) de gélification, la valeur du rapport R tel que défini ci-dessus augmente par rapport à la valeur du rapport R du mélange de l'étape a).

Il a été découvert de façon surprenante que l'augmentation de ce rapport R tel que défini ci-dessus induit une gélification spontanée du mélange obtenu à l'issue de l'étape a) de telle sorte qu'on obtient une pâte de matériau composite carboné présentant une cohésion qui est suffisante pour sa mise en forme à l'étape c), et parfaitement adaptée à une manipulation selon les applications industrielles détaillées ci-dessus du matériau composite carboné obtenu selon le procédé de préparation de l'invention.

Selon l'invention, la valeur du rapport R de la pâte de matériau composite carboné obtenue à l'issue de l'étape b), est supérieure à 0,25, plus préférentiellement supérieure à 0,30, et encore plus préférentiellement comprise entre 0,30 et 0,70. Cependant, une valeur de rapport R trop élevée, à savoir supérieure à 0,70, pourrait présenter l'inconvénient que la pâte de matériau composite carboné obtenue à l'issue de l'étape b) s'effrite.

Selon l'invention, l'étape b) de gélification est mise en oeuvre à une température comprise entre 5°C et 150°C.

Dans un mode de réalisation de l'invention, l'étape b) est réalisée en évaporant au moins une partie du solvant. Par exemple, on évapore la moitié du solvant qui était présent dans le mélange de l'étape a), de telle sorte que la valeur du rapport R tel que défini ci-dessus passe d'une valeur de 0,20 dans le mélange de l'étape a) à une valeur de 0,40 à l'issue de l'étape b).

Par exemple, l'évaporation du solvant consiste à soumettre le mélange de l'étape a) à un séchage par convection ou aspiration d'air, à une température comprise entre 25 et 150°C, de préférence comprise entre 40 et 80°C pour éviter une dégradation de la lignine, et encore plus préférentiellement à une température de l'ordre de 50°C. Cette évaporation est avantageusement mise en oeuvre pendant une durée comprise entre 15 minutes et une heure, de préférence pendant environ 30 minutes.

Le dispositif d'évaporation du solvant peut comprendre un dispositif d'évaporation par chauffage, par aspiration, par convection d'air dans un mélangeur, un malaxeur, une bétonnière, un tambour rotatif, un lyophilisateur, une étuve, un sécheur tunnel, un four par exemple à micro-ondes ou à induction haute fréquence. Bien entendu le dispositif d'évaporation du solvant est parfaitement à la portée de l'homme du métier.

De manière avantageuse, l'évaporation du solvant est réalisée par convection en combinant un balayage d'air avec un brassage de la pâte de matériau composite carboné.

Dans un autre mode de réalisation de l'invention, l'étape b) est réalisée en ajoutant, de préférence de façon progressive, de la lignine dans le mélange obtenu à l'issue de l'étape a), et ce tout en assurant l'homogénéité du mélange, et de préférence jusqu'à ce que la valeur du rapport R tel que défini ci-dessus soit supérieure à 0,25, de préférence supérieure à 0,30, et plus préférentiellement comprise entre 0,30 et 0,70.

De manière tout à fait avantageuse, à l'étape b), on ajoute de la poudre de lignine, de préférence de la poudre de lignine Kraft, dans le mélange obtenu à l'issue de l'étape a).

Préférentiellement, la pâte de matériau composite carboné est malaxée au cours de l'étape b) afin que la gélification se produise de façon homogène dans tout le matériau composite carboné en cours de formation.

L'étape b) du procédé de préparation est importante de manière à obtenir une pâte de matériau composite carboné qui est parfaitement appropriée pour pouvoir ensuite être mise en forme, selon une technique de formage classiquement utilisée dans le domaine technique de l'industrie de l'aluminium ou de l'aciérie.

Au cours de l'étape c) du procédé de préparation, on met en forme la pâte de matériau composite carboné obtenue à l'issue de l'étape b) de manière à donner au matériau composite carboné une forme souhaitée.

Cette étape de mise en forme peut être réalisée par extrusion, pressage, vibro-compactage ou moulage.

L'étape c) de mise en forme est avantageusement réalisée à une température comprise entre 15 et 50°C, ou à température ambiante. Cette température est beaucoup moins élevée que celle mise en oeuvre au cours des procédés de préparation de matériau composite carboné de l'état de l'art qui ont été détaillés ci-dessus.

Optionnellement à l'issue de l'étape c) de mise en forme, le procédé de préparation selon l'invention comprend en outre une étape de solidification du matériau composite carboné mis en forme pour améliorer sa tenue mécanique de manière à pouvoir le manipuler et le stocker plus aisément. De préférence, cette étape de solidification consiste en un traitement thermique, par exemple un séchage mis en oeuvre à une température comprise entre 30°C et 100°C et/ou en l'application d'une convection d'air. Plus précisément, au cours de cette étape de solidification, il se forme une croûte à la surface du matériau composite carboné qui améliore sa cohésion et sa tenue mécanique.

Une forme de réalisation particulièrement avantageuse du procédé de préparation de matériau composite carboné selon l'invention comprend les étapes suivantes :

- On prépare une solution aqueuse basique de lignine en dissolvant, de préférence à environ 80°C, de la poudre de lignine Kraft, avantageusement de la lignine Kraft purifiée (à savoir que les teneurs en soufre et sodium et le taux de cendres sont minimaux dans cette lignine Kraft) dans une solution aqueuse de soude, par exemple de concentration massique de 500g/L et de pH 10.

- On prépare un mélange en mélangeant, avantageusement pendant environ 10 minutes et à température ambiante (soit environ 25°C) des matières premières carbonées (par exemple celles qui ont été détaillées ci-dessus) avec ladite solution aqueuse basique de lignine ainsi obtenue.

- De préférence, dans un mélangeur par aspiration d'air réglé à une température de 50°C, on évapore, avantageusement pendant environ 30 minutes, la solution aqueuse de soude de manière à ce que le mélange ainsi obtenu à l'étape précédente gélifie spontanément et qu'on obtienne une pâte de matériau composite carboné.

- On met en forme, par exemple par extrusion, de préférence à température ambiante (soit environ 25°C), la pâte de matériau composite carboné.

Le matériau composite carboné obtenu à l'issue du procédé de préparation selon l'invention a un pourcentage massique de matières sèches de liant (à savoir essentiellement la masse de lignine, le cas échéant des éventuels agents liants ajoutés au mélange de l'étape a) et des résidus secs issus du solvant) avantageusement inférieur à 10%, de préférence inférieur à 8%, ledit pourcentage massique de matières sèches de liant étant calculé par rapport à la masse totale des matières sèches du matériau composite carboné obtenu à l'issue du procédé selon l'invention.

On relève que le matériau composite carboné obtenu selon le procédé de préparation de la présente invention peut comprendre 50% en moins en masse de matières sèches de liant par rapport à un matériau composite carboné obtenu avec l'utilisation de brai comme liant. En effet, le pourcentage massique de brai par rapport à la masse sèche d'un tel matériau composite carboné est généralement compris entre 10 et 20%. Le procédé de préparation selon l'invention présente ainsi un rendement carbone élevé, et aussi un coût de mise en oeuvre moindre du fait notamment qu'il utilise moins de liant.

Par ailleurs, la réduction du pourcentage massique de liant dans le matériau composite carboné permet de réduire significativement le débit des matières volatiles émises lors de sa cuisson qui est plus rapide.

Ainsi, le procédé de préparation d'un matériau composite carboné selon l'invention présente les avantages suivants :

- la substitution du brai par un produit non cancérigène qu'est la lignine, et de surcroît avec le recyclage de la lignine produite comme résidu des procédés papetiers ;

- la mise en oeuvre des étapes de mélange, de gélification et de mise en forme du procédé dans des installations déjà existantes, et notamment dans les installations de préparation de matériau composite carboné qui utilisent le brai comme liant,

- une très forte diminution de la consommation énergétique (thermique) du procédé tout en obtenant un matériau composite carboné exhibant des propriétés physico-chimiques optimales et équivalentes à celles des matériaux composites carbonés de l'état de l'art.

En effet, du fait de la mise en oeuvre des étapes du procédé de préparation selon l'invention à des températures plus basses (voire sans nécessiter de chauffage) que celles des étapes des procédés de l'état de l'art, le procédé de préparation selon l'invention requiert une consommation énergétique (notamment une consommation thermique) totale très inférieure (plus de 80% inférieure) à celle des procédés de l'état de l'art. Cela constitue un avantage très important de la présente invention.

En ce qui concerne l'étape de mélange, il est important de noter que le procédé de préparation selon l'invention ne nécessite pas la mise en oeuvre de cette étape à des températures aussi élevées que les procédés de préparation de l'art antérieur qui, par exemple, utilisent le brai ou un mélange d'urée et de lignine comme liant. En effet, l'étape de mélange de l'étape a) du procédé de préparation selon l'invention peut être réalisée à température ambiante.

Enfin, avec le procédé de préparation selon l'invention, on améliore d'au moins 50% la productivité par rapport à celle des procédés de l'état de l'art, car l'étape de mélange pour le mouillage des matières premières carbonés est plus rapide qu'avec du brai ou bien avec un mélange d'urée et de lignine et les mises en température des matériaux à des températures élevées (à savoir de l'ordre de 160°C) ne sont plus nécessaires.

L'invention concerne aussi l'utilisation du matériau composite carboné obtenu selon le procédé de préparation selon l'invention pour la fabrication de blocs de carbone, par exemple utilisés comme électrodes dans les cuves d'électrolyse de l'aluminium ou dans les fours d'aciérie, ou encore en tant que produits réfractaires.

L'invention concerne aussi un procédé de fabrication d'un bloc de carbone qui comprend au moins les étapes suivantes :

a) On prépare un matériau composite carboné selon le procédé de préparation tel que décrit ci-dessus.
b) On cuit le matériau composite carboné obtenu à l'issue de l'étape a) jusqu'à l'obtention d'un produit composite carboné solide cuit.

Dans un mode de réalisation de l'invention, le procédé de fabrication d'un bloc de carbone comprend en outre une étape de graphitation du produit obtenu à l'issue de l'étape b).

Les étapes de cuisson et de graphitation usuelles sont parfaitement à la portée à l'homme du métier. Les paramètres de ces étapes sont les paramètres techniques classiquement utilisés dans le domaine technique de fabrication des électrodes, notamment pour l'aluminium ou l'aciérie, ou encore des matériaux réfractaires carbonés.

De préférence, le bloc de carbone est une anode de type précuite ou de type Söderberg, une cathode de l'industrie de l'aluminium, une électrode du domaine de l'aciérie ou de l'électrométallurgie ou encore un bloc carboné réfractaire.

Aussi, le procédé de fabrication d'un bloc de carbone selon l'invention peut parfaitement être mis en oeuvre dans les installations réalisant les procédés de fabrication de blocs de carbone déjà existantes, et notamment dans les installations qui utilisent le brai comme liant lors de la préparation du matériau composite carboné.

En effet, le dispositif de mélange de telles installations peut parfaitement être utilisé pour l'étape a) du procédé de préparation du matériau composite carboné selon l'invention, et ce sans apporter de modifications techniques au dispositif.

De plus, l'étape b) de gélification par évaporation de solvant du procédé de préparation selon l'invention peut être réalisée dans un mélangeur ou bien encore dans un dispositif de refroidissement par convection d'air combinée à un brassage qui sont des dispositifs habituellement utilisés au cours du procédé de fabrication de blocs de carbone de l'état de l'art qui a été décrit ci-dessus.

**Description des figures :**

- La figure 1 est un diagramme d'isoréponses de l'angle de contact sur des matières premières carbonées comprenant du coke de pétrole ;

- La figure 2 est un diagramme d'isoréponses de l'angle de contact sur des matières premières carbonées comprenant du graphite.

- Sur la figure 3 sont représentés des courbes montrant l'évolution de la viscosité en fonction du pH selon la concentration massique en lignine dans une solution aqueuse basique.

**Partie expérimentale :**

Des analyses de la mouillabilité sur des matières premières carbonées de solutions aqueuses de soude dans lesquelles avait été dissoute de la poudre de lignine Kraft ont été effectuées. Plus particulièrement sur :

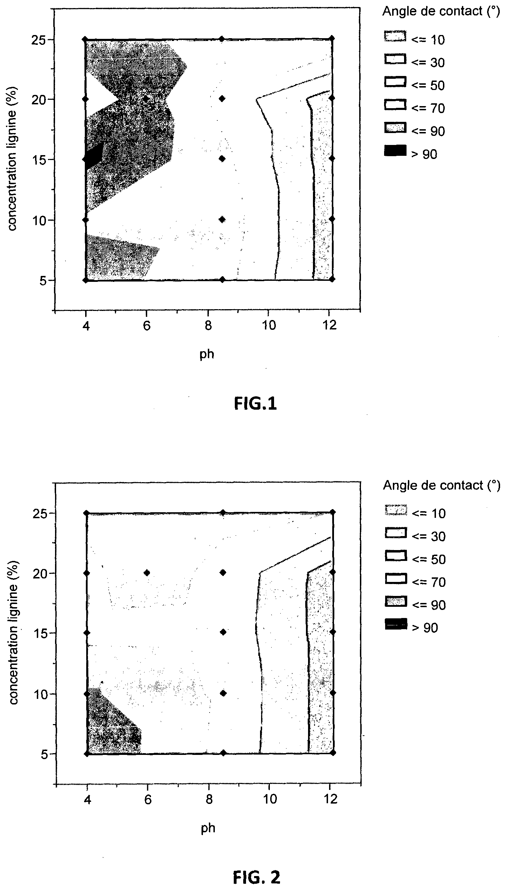

a) des matières premières carbonées comprenant du coke de pétrole (figure 1);

b) des matières premières carbonées comprenant du graphite (figure 2).

Pour ce faire, on a fait varier la concentration en lignine et le pH des solutions aqueuses de soude et l'on a mesuré l'angle de contact sur ces produits massifs carbonés, et ce à température ambiante (soit environ 25°C). L'angle de contact est représentatif des interactions de surface entre la lignine en solution et les matières premières carbonées, donc de la mouillabilité.

Les figures 1 et 2 présentent les diagrammes d'isoréponses de l'angle de contact de la lignine en solution sur des matières premières carbonées en fonction de la concentration massique de lignine et du pH.

Plus précisément, la concentration massique de lignine est définie selon la formule (1) suivante :

$$\text{Concentration massique de lignine} = \frac{(masse\ de\ lignine)}{(masse\ de\ liant)} \times 100 \quad (1)$$

En d'autres termes, la formule (1) correspond au rapport R défini ci-dessus multiplié par un facteur de 100.

La masse de liant correspond à la somme des masses de lignine et de solution aqueuse de soude.

Au vu des graphiques des figures 1 et 2, on relève qu'une solution aqueuse basique comprenant de la lignine est particulièrement appropriée pour le mouillage des matières premières carbonées choisies parmi le coke de pétrole et le graphite, car la mouillabilité est importante lorsque l'angle de contact est petit.

En outre, on a mesuré la viscosité, exprimée en Pa.s, de solutions aqueuses basiques dans lesquelles on avait dissout de la lignine Kraft en poudre, et ce à différentes concentrations massiques en lignine déterminées selon la formule (1) détaillée ci-dessus.

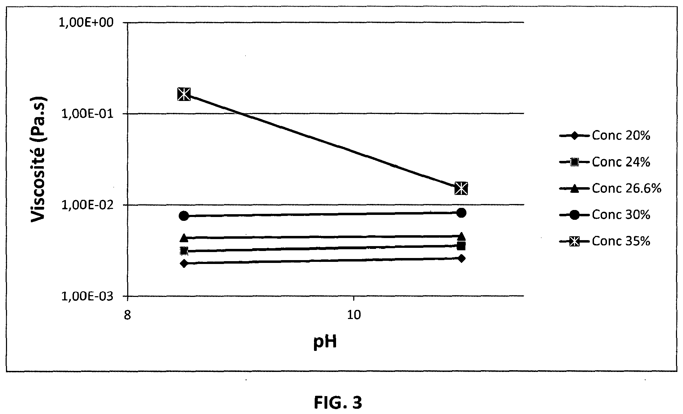

Ainsi, les courbes de la figure 3 représentent l'évolution de la viscosité en fonction du pH de solutions aqueuses de soude dans lesquelles a été dissoute de la poudre de lignine Kraft, et ce à différentes concentrations massiques en lignine.

Sur la figure 3, on relève ainsi que plus la concentration massique en lignine augmente (plus le rapport R augmente), plus la viscosité de la solution aqueuse basique contenant de la lignine augmente.

Ainsi, à un pH de 8,5, si l'on fait varier la concentration massique de lignine (ou autrement dit le rapport R tel que défini ci-dessus), on constate bien une modification importante de la viscosité de la solution aqueuse basique contenant de la lignine.

Ce phénomène de modification de la viscosité ainsi constaté dans l'expérimentation décrite ci-dessus est à l'origine de la gélification spontanée qui se produit dans le mélange au cours de l'étape b) détaillée ci-dessus du procédé de préparation d'un matériau composite carboné selon l'invention.

**Revendications**

1. Procédé de préparation d'un matériau composite carboné, **caractérisé en ce qu'**il comprend au moins les étapes suivantes :

   a) On prépare un mélange comprenant au moins :

   en pourcentage massique par rapport à la masse totale de matières sèches, entre 80% et 97% de matières premières carbonées choisies parmi le coke, l'anthracite, le recyclé de blocs carbonés et le graphite artificiel, et

   - un liant comprenant un solvant qui est choisi parmi les solutions aqueuses de pH supérieur à 7 ou parmi les solvants organiques dans lesquels est soluble la lignine Kraft et de la lignine, ladite lignine ayant un pourcentage massique par rapport à la masse totale de matières sèches compris entre 3% et 20%, et optionnellement

   au moins un agent liant choisi parmi les polysaccharides et les carbohydrates et dont la masse représente jusqu'à 20% de la masse de lignine,
   sur la base d'un rapport R défini par la formule suivante :

$$\frac{(masse\ de\ lignine)}{(masse\ de\ liant)} = R$$

   dans laquelle la masse de liant correspond à la somme des masses de lignine, de solvant et, le cas échéant du au moins un agent liant, la valeur du rapport R étant inférieure à 0,25 ;

   b) On gélifie le mélange obtenu à l'issue de l'étape a) à une température comprise entre 5°C et 150°C jusqu'à l'obtention d'une pâte de matériau composite carboné en faisant varier la valeur du rapport R de sorte que la valeur du rapport R de la pâte de matériau composite carboné obtenue à l'issue de l'étape b) est supérieure à 0,25 ;
   c) On met en forme la pâte de matériau composite carboné obtenue à l'issue de l'étape b) de manière à lui donner une forme souhaitée,

   et **en ce que** l'étape b) est réalisée en évaporant au moins une partie du solvant ou en ajoutant de la lignine dans le mélange obtenu à l'issue de l'étape a).

2. Procédé de préparation selon la revendication 1, **caractérisé en ce que** le solvant est une solution aqueuse basique choisie parmi les solutions aqueuses de soude, d'ammoniaque, d'hydroxyde de potassium, d'hydroxyde de magnésium et d'oxyde de calcium.

3. Procédé de préparation selon la revendication 1, **caractérisé en ce que** le solvant est un solvant organique choisi parmi le diméthylformamide, le diméthylsulfoxyde, le dioxane, le 2 méthoxy-éthanol, l'acétone et l'éthanol.

4. Procédé de préparation selon l'une quelconque des revendications 1 à 3, **caractérisé en ce que** la lignine est une lignine Kraft.

5. Procédé de préparation selon l'une des revendications 1 à 4, **caractérisé en ce que** la valeur du rapport R dans le mélange de l'étape a) est comprise entre 0,07 et 0,25, encore plus préférentiellement comprise entre 0,15 et 0,20.

**6.** Procédé de préparation selon l'une des revendications 1 à 5, **caractérisé en ce que** la valeur du rapport R de la pâte de matériau composite carboné obtenue à l'issue de l'étape b) est supérieure à 0,30, et encore plus préférentiellement comprise entre 0,30 et 0,70.

**7.** Procédé de préparation selon l'une des revendications 1 à 6, **caractérisé en ce que** la valeur du rapport R est multipliée par un coefficient S au moins égal à 1.2, et de préférence au moins égal à 1.5, au cours de l'étape b) de gélification.

**8.** Procédé de préparation selon la revendication 7, **caractérisé en ce que** le coefficient S est inférieur à 5, et de préférence inférieur à 3.

**9.** Procédé de préparation selon l'une quelconque des revendications 1 à 8, **caractérisé en ce qu'**il comprend en outre à l'issue de l'étape c), une étape de solidification du matériau composite carboné mis en forme qui consiste en un séchage mis en oeuvre à une température comprise entre 30°C et 100°C et/ou en l'application d'une convection d'air.

**10.** Procédé de préparation selon l'une quelconque des revendications 1 à 9, **caractérisé en ce qu'**il comprend au moins les étapes suivantes :

- On prépare une solution aqueuse basique de lignine en dissolvant de la poudre de lignine Kraft dans une solution aqueuse de soude ;
- On prépare un mélange en mélangeant les matières premières carbonées avec ladite solution aqueuse basique de lignine ;
- On évapore la solution aqueuse de soude de manière à ce que le mélange ainsi obtenu à l'étape précédente gélifie spontanément et qu'on obtienne une pâte de matériau composite carboné ;
- On met en forme la pâte de matériau composite carboné.

**11.** Procédé de fabrication d'un bloc de carbone qui comprend au moins les étapes suivantes :

a) On prépare un matériau composite carboné selon le procédé de préparation selon l'une quelconque des revendications 1 à 10 ;
b) On cuit le matériau composite carboné obtenu à l'issue de l'étape a) de manière à obtenir un produit composite carboné solide.

**12.** Procédé de fabrication d'un bloc de carbone selon la revendication 12, **caractérisé en ce qu'**il comprend en outre une étape de graphitation du produit obtenu à l'issue de l'étape b).

**Patentansprüche**

**1.** Verfahren zur Herstellung eines kohlenstoffhaltigen Verbundmaterials, **dadurch gekennzeichnet, dass** es mindestens die folgenden Schritte umfasst:

a) Herstellen einer Mischung, die mindestens Folgendes umfasst:

in Massenprozent, bezogen auf die Gesamtmasse der Trockenmaterialien, zwischen 80 % und 97 % kohlenstoffhaltige Rohstoffe, ausgewählt aus Koks, Anthrazit, Rezyklat aus kohlenstoffhaltigen Blöcken und künstlichem Graphit, und

- ein Bindemittel, das ein Lösungsmittel umfasst, das ausgewählt ist aus wässrigen Lösungen mit einem pH-Wert höher als 7 oder aus organischen Lösungsmitteln, in denen Kraft-Lignin löslich ist, und Lignin, wobei das Lignin einen Massenprozentsatz, bezogen auf die Gesamtmasse der Trockenmaterialien, zwischen 3 % und 20 % aufweist, und optional

mindestens ein Bindemittel, das ausgewählt ist aus Polysacchariden und Kohlenhydraten und dessen Masse bis zu 20 % der Masse des Lignins ausmacht, bezogen auf ein Verhältnis R, das durch die folgende Formel definiert ist:

$$\frac{(\text{Masse des Lignins})}{(\text{Masse des Bindemittels})} = R$$

wobei die Masse des Bindemittels der Summe der Massen des Lignins, des Lösungsmittels und gegebenenfalls des mindestens einen Bindemittels entspricht und der Wert des Verhältnisses R kleiner als 0,25 ist;

b) Gelieren der am Ende von Schritt a) erhaltenen Mischung bei einer Temperatur zwischen 5 °C und 150 °C bis zum Erhalt einer Paste aus Kohlenstoffverbundmaterial, wobei der Wert des Verhältnisses R so variiert wird, dass der Wert des Verhältnisses R der nach Schritt b) erhaltenen Paste aus Kohlenstoffverbundmaterial größer als 0,25 ist;

c) Formen der am Ende von Schritt b) erhaltenen Paste aus kohlenstoffhaltigem Verbundmaterial, sodass sie eine gewünschte Form erhält,

und dadurch, dass Schritt b) durch Verdampfen mindestens eines Teils des Lösungsmittels oder durch Zugabe des Lignins in die am Ende von Schritt a) erhaltene Mischung durchgeführt wird,

2. Herstellungsverfahren nach Anspruch 1, **dadurch gekennzeichnet, dass** es sich bei dem Lösungsmittel um eine basische wässrige Lösung handelt, die aus den wässrigen Lösungen von Soda, Ammoniak, Kaliumhydroxid, Magnesiumhydroxid und Calciumoxid ausgewählt ist.

3. Herstellungsverfahren nach Anspruch 1, **dadurch gekennzeichnet, dass** das Lösungsmittel ein organisches Lösungsmittel ist, das aus Dimethylformamid, Dimethylsulfoxid, Dioxan, 2-Methoxyethanol, Aceton und Ethanol ausgewählt ist.

4. Herstellungsverfahren nach einem der Ansprüche 1 bis 3, **dadurch gekennzeichnet, dass** es sich bei dem Lignin um ein Kraft-Lignin handelt.

5. Herstellungsverfahren nach einem der Ansprüche 1 bis 4, **dadurch gekennzeichnet, dass** der Wert des Verhältnisses R in der Mischung aus Schritt a) zwischen 0,07 und 0,25, noch bevorzugter zwischen 0,15 und 0,20 liegt.

6. Herstellungsverfahren nach einem der Ansprüche 1 bis 5, **dadurch gekennzeichnet, dass** der Wert des Verhältnisses R der am Ende von Schritt b) erhaltenen Paste aus kohlenstoffhaltigem Verbundmaterial größer als 0,30 ist und noch bevorzugter zwischen 0,30 und 0,70 liegt.

7. Herstellungsverfahren nach einem der Ansprüche 1 bis 6, **dadurch gekennzeichnet, dass** der Wert des Verhältnisses R während des Gelierschritts b) mit einem Koeffizienten S multipliziert wird, der mindestens gleich 1,2 und vorzugsweise mindestens gleich 1,5 ist.

8. Herstellungsverfahren nach Anspruch 7, **dadurch gekennzeichnet, dass** der Koeffizient S kleiner als 5 und vorzugsweise kleiner als 3 ist.

9. Herstellungsverfahren nach einem der Ansprüche 1 bis 8, **dadurch gekennzeichnet, dass** es außerdem am Ende von Schritt c) einen Schritt zur Verfestigung des geformten kohlenstoffhaltigen Verbundmaterials umfasst, der aus einer Trocknung besteht, die bei einer Temperatur zwischen 30 °C und 100 °C durchgeführt wird, und/oder aus der Anwendung einer Luftkonvektion.

10. Verfahren zur Herstellung nach einem der Ansprüche 1 bis 9, **dadurch gekennzeichnet, dass** es mindestens die folgenden Schritte umfasst:

- Herstellen einer basischen wässrigen Ligninlösung durch Auflösen von Kraft-Ligninpulver in einer wässrigen Sodalösung;
- Herstellen einer Mischung durch Vermischen der kohlenstoffhaltigen Rohstoffe mit der basischen wässrigen Ligninlösung;
- Verdampfen der wässrigen Sodalösung, so dass die im vorherigen Schritt erhaltene Mischung spontan geliert und man eine Paste aus Kohlenstoffverbundwerkstoff erhält;

- Formen einer Paste aus kohlenstoffhaltigem Verbundmaterial.

**11.** Verfahren zur Herstellung eines Kohlenstoffblocks, das mindestens die folgenden Schritte umfasst:

a) Herstellen eines kohlenstoffhaltigen Verbundmaterials gemäß dem Herstellungsverfahren nach einem der Ansprüche 1 bis 10;
b) Brennen des am Ende von Schritt a) erhaltenen kohlenstoffhaltigen Verbundmaterials, um ein festes kohlenstoffhaltiges Verbundprodukt zu erhalten.

**12.** Verfahren zur Herstellung eines Kohlenstoffblocks nach Anspruch 12, **dadurch gekennzeichnet, dass** es außerdem einen Schritt des Graphitierens des am Ende von Schritt b) erhaltenen Produkts umfasst.

**Claims**

**1.** A method for preparing a carbon composite material, **characterized in that** it comprises at least the following steps:

a) a mixture is prepared comprising at least:

in percentage by weight relative to the total mass of dry materials, between 80% and 97% of carbonaceous raw materials selected from coke, anthracite, recycled carbonaceous blocks and artificial graphite, and

- a binder comprising a solvent which is selected from the aqueous solutions with a pH greater than 7 or from the organic solvents in which Kraft lignin and lignin are soluble, said lignin having a mass percentage relative to the total mass of dry materials comprised between 3% and 20%, and optionally

at least one binding agent selected from polysaccharides and carbohydrates and whose mass represents up to 20% of the mass of lignin,
on the basis of a ratio R defined by the following formula:

$$\frac{lignin\ mass}{binder\ mass} = R$$

in which the binder mass corresponds to the sum of the masses of lignin, solvent and, where appropriate, at least one binder, the value of the ratio R being less than 0.25;

b) The mixture obtained at the end of step a) is gelled at a temperature comprised between 5°C and 150°C until a paste of carbon composite material is obtained by varying the value of the ratio R so that the value of the ratio R of the carbon composite material paste obtained at the end of step b) is greater than 0.25;
c) The paste of carbon composite material obtained at the end of step b) is shaped so as to give it a desired shape,

and **in that** step b) is carried out by evaporating at least part of the solvent or by adding lignin to the mixture obtained at the end of step a).

**2.** The preparing method according to claim 1, **characterized in that** the solvent is a basic aqueous solution selected from the aqueous solutions of sodium hydroxide, ammonia, potassium hydroxide, magnesium hydroxide and calcium oxide.

**3.** The preparing method according to claim 1, **characterized in that** the solvent is an organic solvent selected from dimethylformamide, dimethyl sulfoxide, dioxane, 2 methoxy-ethanol, acetone and ethanol.

**4.** The preparing method according to any one of claims 1 to 3, **characterized in that** the lignin is a Kraft lignin.

**5.** The preparing method according to any of claims 1 to 4, **characterized in that** the value of the ratio R in the mixture of step a) is comprised between 0.07 and 0.25, even more preferably comprised between 0.15 and 0.20.

**6.** The preparing method according to any of claims 1 to 5, **characterized in that** the value of the ratio R of the carbon composite material paste obtained at the end of step b) is greater than 0.30, and even more preferably comprised between 0.30 and 0.70.

7. The preparing method according to any of claims 1 to 6, **characterized in that** the value of the ratio R is multiplied by a coefficient S at least equal to 1.2, and preferably at least equal to 1.5, during the gelling step b).

8. The preparing method according to claim 7, **characterized in that** the coefficient S is less than 5, and preferably less than 3.

9. The preparing method according to any one of claims 1 to 8, **characterized in that** it further comprises, at the end of step c), a step of solidifying the shaped carbon composite material which consists of a drying carried out at a temperature comprised between 30°C and 100°C and/or the applying of an air convection,

10. The preparing method according to any one of claims 1 to 9, **characterized in that** it comprises at least the following steps:

- a basic aqueous lignin solution is prepared by dissolving Kraft lignin powder in an aqueous sodium hydroxide solution;
- a mixture is prepared by mixing the carbonaceous raw materials with said basic aqueous lignin solution;
- the aqueous sodium hydroxide solution is evaporated so that the mixture thus obtained in the previous step gels spontaneously and a paste of carbon composite material is obtained;
- the carbon composite material paste is shaped.

11. A method for manufacturing a carbon block which comprises at least the following steps:

a) a carbon composite material is prepared according to the preparation method according to any one of claims 1 to 10;
b) the carbon composite material obtained at the end of step a) is cooked so as to obtain a solid carbon composite product.

12. The method for manufacturing a carbon block according to claim 12, **characterized in that** it further comprises a step of graphitizing the product obtained at the end of step b).

FIG.1

FIG. 2

**FIG. 3**

**EP 3 142 988 B1**

## RÉFÉRENCES CITÉES DANS LA DESCRIPTION

**Documents brevets cités dans la description**

- US 4072599 A
- US 3615829 A
- US 4704230 A
- US 20100325947 A1